(19) Europäisches Patentamt
European Patent Office
Office européen des brevets

(11) Publication number: **0 286 257 A2**

(12) **EUROPEAN PATENT APPLICATION**

(21) Application number: 88302374.9

(51) Int. Cl.4: C08G 75/02 , C08L 81/02

(22) Date of filing: 18.03.88

(30) Priority: 06.04.87 JP 84110/87

(43) Date of publication of application: 12.10.88 Bulletin 88/41

(84) Designated Contracting States: AT BE CH DE ES FR GB GR IT LI LU NL SE

(71) Applicant: POLYPLASTICS CO. LTD.
30, Azuchimachi 2-chome
Higashi-ku Osaka-shi Osaka(JP)

Applicant: KUREHA CHEMICAL INDUSTRY CO., LTD.
9-11, Horidome-cho, 1-chome Nihonbashi
Chuo-ku Tokyo 103(JP)

(72) Inventor: Takahashi, Katsuhiko
973, Miyajima
Fuji-shi Shizuoka(JP)
Inventor: Nitoh, Toshikatsu
973, Miyajima
Fuji-shi Shizuoka(JP)
Inventor: Nonaka, Toshifumi
973, Miyajima
Fuji-shi Shizuoka(JP)

(74) Representative: Jackson, Peter et al
HYDE, HEIDE & O'DONNELL 146 Buckingham Palace Road
London SW1W 9TR(GB)

(54) **Process for producing improved polyphenylene sulfide resin.**

(57) A modified polyphenylene sulfide resin is produced by the steps of mixing a polyphenylene sulfide resin with at least one silane compound selected from the group consisting of vinylalkoxysilanes, epoxyalkoxysilanes, aminoalkoxysilanes and mercaptoalkoxysilanes and kneading the mixture at a temperature which is higher by 5 to 100°c than the melting point of the polyphenylene sulfide resin for at least 30 seconds. It has an increased melt viscosity.

EP 0 286 257 A2

# PROCESS FOR PRODUCING IMPROVED POLYPHENYLENE SULFIDE RESIN

The present invention relates to a process for producing a polyphenylene sulfide resin. In particular, the present invention relates to a process for producing a modified polyphenylene sulfide resin which can be easily molded to form injection-molded products, films, fibers, etc. by increasing the melt viscosity of the polyphenylene sulfide resin.

[Prior Art)

Recently thermoplastic resins having a high heat resistance are required as the materials for components of electric and electronic appliances, automobile parts and parts of chemical instruments. Although polyphenylene sulfide resin is one of the resins which satisfy the above-mentioned requirement, it has a defect that a polymer having a high degree of polymerization cannot be easily obtained. Therefore, the melt viscosity of such a polyphenylene sulfide resin is insufficient and the formation of injection-molded products, particularly, films, sheets and filaments is difficult. In addition, the physical properties of the resin are also insufficient. To cope with these problems it is a usual practice to further increase the molecular weight and melt viscosity of the polyphenylene sulfide before molding. The following processes are known for increasing the molecular weight and melt viscosity of the polyphenylene sulfide:

(1) a process wherein the polyphenylene sulfide is treated with an oxygen-containing gas at a temperature of as high as 200 to 300°C,

(2) a process wherein a crosslinking agent such as trichlorobenzene is added in the polymerization step to obtain a branched polyphenylene sulfide (see Japanese Patent Laid-Open No. 109523/1984), and

(3) a process wherein the polyphenylene sulfide is treated with an oxidizing agent or a radical-generating agent at a temperature of 0 to 220°C (see Japanese Patent Laid-Open No. 168032/1984).

However, the process (1) has a problem that the treated polymer is colored seriously. The process (2) has a problem that the strength of the polymer is unsatisfactory, since it has a highly branched structure and a poor linearity. The process (3) has problems that the production of the product having a stable viscosity is difficult and that the coloration thereof cannot be inhibited.

In other words, since the above-mentioned conventional processes employed for increasing the molecular weight and melt viscosity of the polyphenylene sulfide are based on the radical reaction utilizing oxygen, they have defects that the control of the reaction is difficult, that a complicated apparatus and a long reaction time are necessitated so that the coloration of the product cannot be inhibited and that the main chain of the polymer is broken to affect the physical properties such as strength. In addition, the cost is high.

Summary of the Invention

The inventors made intensive investigations for the purpose of developing a process for producing polyphenylene sulfide having a high melt viscosity without causing coloration or deterioration of the physical properties at a low cost.

The inventors noticed the reactive terminal group of the polyphenylene sulfide and made investigations for the purpose of finding a reactive substance which reacts with the terminal group under such conditions that the main chain is not broken. As a result, the inventors have found that a polyphenylene sulfide having a high melt viscosity can be formed by reacting a silane compound having an alkoxy group in the molecule with the polyphenylene sulfide resin by kneading them together at a specific temperature for a specific period of time. The present invention has been completed on the basis of this finding.

A modified polyphenylene sulfide resin is produced by the steps of mixing a polyphenylene sulfide resin with at least one silane compound selected from the group consisting of vinylalkoxysilanes, epoxyalkoxysilanes, aminoalkoxysilanes and mercaptoalkoxysilanes and kneading the mixture at a temperature which is higher by 5 to 100°C than the melting point of the polyphenylene sulfide resin for at least 30 seconds.

The present invention provides a process for producing an improved polyphenylene sulfide resin characterized in that at least one silane compound selected from the group consisting of vinylalkoxysilanes, epoxyalkoxysilanes, aminoalkoxysilanes and mercaptoalkoxysilanes is added to a polyphenylene sulfide resin and the mixture is kneaded under heating at a temperature higher than the melting point of the polyphenylene sulfide resin by 5 to 100°C for at least 30 sec to react the polyphenylene sulfide resin with the silane compound.

Though the silane compounds are usually used for the purpose of enhancing the adhesion between an inorganic filler and a polymer matrix resin to increase the strength, they are used in the present invention for the purpose utterly different therefrom. Thus the process of the present invention is characterized in that it is effective irrespective of the presence of the inorganic filler.

The silane compound(s) used in the present invention is(are) at least one of vinylalkoxysilanes, epoxyalkoxysilanes, aminoalkoxysilanes and mercaptoalkoxysilanes, among which

the vinylalkoxysilanes include, for example, vinyltriethoxysilane, vinyltrimethoxysilane and vinyltris(β-methoxyethoxy)silane,

the epoxyalkoxysilanes include, for example, γ-glycidoxypropyltrimethoxysilane, β-(3,4-epoxycyclohexyl)ethyltrimethoxysilane and γ-glycidoxypropyltriethoxysilane,

the aminoalkoxysilanes include, for example, γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane and N-phenyl-γ-aminopropyltrimethoxysilane, and

the mercaptoalkoxysilanes include, for example, γ-mercaptopropyltrimethoxysilane and γ-mercaptopropyltriethoxysilane.

The polyphenylene sulfide resin used in the present invention is a polymer comprising at least 90 molar %, preferably at least 95 molar %, of a recurring unit of the structural formula:

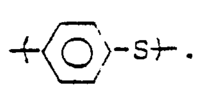

This polymer has a melt viscosity in the range of 10 to 20,000 P, preferably 100 to 5,000 P, as determined under conditions comprising a temperature of 310°C and a shear rate of 1,200 $sec^{-1}$.

The amount of the silane compound to be added to the polyphenylene sulfide in the present invention is 0.01 to 5 parts by weight, preferably 0.1 to 3 parts by weight, for 100 parts by weight of the polyphenylene sulfide. When it is less than 0.01 part by weight, any intended effect cannot be obtained and, on the other hand, when it exceeds 5 parts by weight, side reactions occur unfavorably. The treatment temperature in the present invention is higher than the melting point of the polyphenylene sulfide to be treated by 5 to 100°C, preferably by 10 to 70°C. When the temperature is lower than this range, any sufficient effect cannot be obtained, while when it is excessively high, the decomposition and other abnormal reactions occur and the product is colored unfavorably.

The treatment time which varies depending on the treatment temperature and the amount of the silane compound is 30 sec to 15 min, preferably 1 to 10 min.

The kneading treatment under heating in the present invention can be conducted in any of ordinary devices used for the treatment of a highly viscous liquid at a high temperature. Among them, a twin-screw extruder or a single-screw extruder is usually preferred.

The polyphenylene sulfide resin may contain, in addition to the silane compound, ordinary additives such as an antioxidant, heat stabilizer, lubricant, crystal nucleating agent, U.V. absorber, colorant and releasing agent. These additives are incorporated in the resin composition in the course of the above-mentioned hot kneading treatment or in another step. The polyphenylene sulfide resin may be blended with a small amount of other polymers so far as the object of the present invention is not inhibited.

[Effects of the Invention]

The polyphenylene sulfide resin produced by the process of the present invention has the following effects:

(1) the resin has an increased molecular weight and the viscosity of the resin can be increased 1.5 to 2.5 times as much as that of the untreated polyphenylene sulfide as determined at a temperature of 310°C and at a shear rate of 1,200 $sec^{-1}$ so that the resin has an improved moldability,

(2) the physical and mechanical properties such as tensile strength and tensile elongation of the molded article are improved,

(3) the resin is scarcely colored and its hue is equivalent to that of the untreated polyphenylene sulfide, and

(4) the resin has an improved moldability and the molding cycle can be reduced, while formation of fins in the injection molding is reduced.

Although a detailed mechanism of the functions and effects of the present invention has not been thoroughly elucidated yet, supposedly the polyphenylene sulfide molecules are bonded together by means of the silane compound to increase the chain length.

[Examples]

The following examples will further illustrate the present invention, which by no means limit the invention.

Examples 1 to 6 and Comparative Example 1

γ-Aminopropyltriethoxysilane in an amount shown in Table 1 was added to 100 parts by weight of polyphenylene sulfide having a melting point of 285°C. The mixture was premixed with a Henschel mixer for 5 min. The premix was shaped to form polyphenylene sulfide pellets with an extruder (PCM 30; a product of Ikemi Tekko Co.) at a cylinder temperature of 310°C (residence time: about 5 min). Then test pieces were formed with an injection molding machine (Toshiba IS-50EP) at a cylinder temperature of 320°C and a mold temperature of 150°C. The strength and the elongation of the test pieces were measured.

The pellets prepared as described above was pressed with a press at 310°C without preheating and then the product was rapidly cooled to obtain a sheet having a thickness of 0.2 mm. A part of the sheet was sliced and the melt viscosity thereof was determined with a Capillograph tester (a product of Toyo Seiki Co.) at 310°C at various shear rates. The results are shown in Table 1.

Table 1

| | Silane compound (part by weight) | Tensile strength kg/cm$^2$ | Tensile elongation % | Melt viscosity (Poise) | | | | | | |
|---|---|---|---|---|---|---|---|---|---|---|
| | | | | Shear rate (sec$^{-1}$) | | | | | | |
| | | | | 24 | 61 | 122 | 610 | 1220 | 6080 | 12160 |
| Example 1 | γ-aminopropyl-triethoxysilane (0.01) | 800 | 4.0 | 25200 | 16720 | 7200 | 3010 | 2200 | 1020 | 800 |
| " 2 | ditto (0.1) | 800 | 4.0 | 35300 | 19430 | 12100 | 3580 | 2720 | 1110 | 980 |
| " 3 | ditto (0.5) | 840 | 4.1 | 67220 | 25760 | 13390 | 7020 | 4590 | 1780 | 1100 |
| " 4 | ditto (1.0) | 920 | 4.3 | 87490 | 39790 | 22770 | 7230 | 4850 | 1860 | 1180 |
| " 5 | ditto (2.0) | 860 | 4.4 | 45320 | 28500 | 12100 | 4000 | 3100 | 1420 | 870 |
| " 6 | ditto (3.0) | 830 | 4.3 | 34240 | 16200 | 8100 | 3310 | 2520 | 1110 | 820 |
| Comp. Ex. 1 | none | 790 | 4.0 | 20100 | 12570 | 6900 | 2420 | 1840 | 910 | 660 |

Examples 7 to 10 and Comparative Example 1

Pellets and then test pieces were prepared and the physical properties of them were examined in the same manner as in Example 1 except that γ-mercaptopropyltrimethoxysilane was added in an amount shown in Table 2 to 100 parts by weight of polyphenylene sulfide having a melting point of 285°C. The test pieces were prepared and the physical properties of them were examined in the same manner as above. Further. the test pieces were prepared at a mold temperature of 50°C and the specific gravity of them was determined according to a method of ASTM D 792.

Then the pellets were crystallized in a Perkin-Elmer DSC 7 differential calorimeter in a nitrogen stream at a holding temperature of 340°C and a cooling rate of 10°C/min and the crystallization temperature was determined. The results are shown in Table 2.

Table 2

| | Silane compound (part by weight) | Tensile strength kg/cm2 | Tensile elongation % | Melt Viscosity (Poise) | | | | | | | Crystallization temperature °C | Specific gravit |
|---|---|---|---|---|---|---|---|---|---|---|---|---|
| | | | | Shear rate ($sec^{-1}$) | | | | | | | | |
| | | | | 24 | 61 | 122 | 610 | 1220 | 6080 | 12160 | | |
| Example 7 | γ-mercaptopropyltrimethoxysilane (0.1) | 800 | 4.1 | 23400 | 15320 | 9820 | 3320 | 2430 | 1020 | 980 | 234 | 1.33 |
| " 8 | ditto (0.5) | 890 | 4.2 | 44990 | 22760 | 14790 | 5670 | 4020 | 1630 | 1070 | 235 | 1.33 |
| " 9 | ditto (1.0) | 910 | 4.4 | 58300 | 24820 | 12400 | 6870 | 4320 | 1620 | 1010 | 235 | 1.33 |
| " 10 | ditto (1.5) | 860 | 4.3 | 62300 | 28360 | 15320 | 7200 | 4500 | 1870 | 1090 | 238 | 1.33 |
| Comp. Ex.1 | none | 790 | 4.0 | 20100 | 12570 | 6900 | 2420 | 1840 | 910 | 660 | 222 | 1.32 |

Examples 11 to 19 and Comparative Example 2

1 part by weight of a silane compound shown in Table 3 was added to 100 parts by weight of polyphenylene sulfide having a melting point of 285°C and they were mixed in the same manner as in Examples 1 to 6. Pellets were prepared from the mixture with an extruder at a cylinder temperature of 330°C (residence time: about 3 min). Test pieces were prepared from the pellets in the same manner as in Examples 1 to 6. The properties of them were examined to obtain the results shown in Table 3.

This invention also includes within its scope a modified polyphenylene sulfide resin articles/products/polymers produced according to the process of the invention.

Table 3

| | Silane compound (wt. %) | Tensile strength kg/cm$^2$ | Tensile elongation % | Melt viscosity (Poise) | | | | | | |
|---|---|---|---|---|---|---|---|---|---|---|
| | | | | Shear rate ($sec^{-1}$) | | | | | | |
| | | | | 24 | 61 | 122 | 610 | 1220 | 6080 | 12160 |
| Example 11 | vinyltrimethoxysilane (1.0) | 900 | 4.2 | 35320 | 18450 | 8280 | 3290 | 2410 | 1090 | 730 |
| " 12 | vinyltriethoxysilane (1.0) | 880 | 4.3 | 38280 | 19990 | 9310 | 3520 | 2600 | 1090 | 750 |
| " 13 | γ-glycidoxypropyltrimethoxysilane (1.0) | 820 | 4.1 | 48370 | 25710 | 10230 | 4400 | 3000 | 1240 | 840 |
| " 14 | β-(3,4-epoxycyclohexyl)-ethyltrimethoxysilane (1.0) | 850 | 4.2 | 38910 | 23890 | 9910 | 4320 | 2700 | 1200 | 790 |
| " 15 | γ-mercaptopropyltriethoxysilane (1.0) | 910 | 4.2 | 43120 | 22700 | 14500 | 5590 | 3980 | 1580 | 1060 |
| " 16 | vinyltris(β-methoxyethoxy)silane (1.0) | 870 | 4.1 | 34240 | 16230 | 8000 | 3210 | 2380 | 1080 | 750 |
| " 17 | γ-methacryloxypropyltrimethoxysilane (1.0) | 860 | 4.2 | 36330 | 18420 | 10860 | 3840 | 3020 | 1180 | 790 |
| " 18 | N-(β-aminoethyl)γ-aminopropyltrimethoxysilane (1.0) | 880 | 4.3 | 38420 | 18320 | 11200 | 4720 | 3240 | 1260 | 880 |
| " 19 | N-phenyl-γ-aminopropyltrimethoxysilane (1.0) | 890 | 4.3 | 48200 | 25620 | 11000 | 4320 | 3100 | 1220 | 860 |
| Comp. Ex. 2 | none | 790 | 3.9 | 18920 | 11110 | 6730 | 2400 | 1790 | 900 | 640 |

## Claims

1. A process for producing a modified polyphenylene sulfide resin, which comprises the steps of mixing a polyphenylene sulfide resin with at least one silane compound selected from the group consisting of vinylalkoxysilanes, epoxyalkoxysilanes, aminoalkoxysilanes and mercaptalkoxysilanes and kneading the mixture at a temperature which is higher by 5 to 100°C than the melting point of the polyphenylene sulfide resin for at least 30 seconds.

2. A process as claimed in claim 1, in which the silane compound is selected from vinyltriethoxysilane, vinyltrimethoxysilane, vinyltris(β-methoxyethoxy)silane, γ-glycidoxypropyltrimethoxysilane β-(3,4-epoxycyclohexyl)ethyltrimethoxysilane, γ-glycidoxypropyltriethoxysilane, γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-phenyl-γ-aminopropyltrimethoxysilane, γ-mercaptopropyltrimethoxysilane and γ-mercaptopropyltriethoxysilane.

3. A process as claimed in Claim 1 or Claim 2, in which 0.01 to 5 parts by weight, based on 100 parts by weight of the polyphenylene sulfide resin, of the silane compound is used.

4. A process as claimed in Claim 3, in which the amount of the silane compound added to the polyphenylene sulfide is 0.1 to 3 parts by weight, based on 100 parts by weight of the polyphenylene sulfide resin.

5. A process as claimed in any preceding claim, in which the kneading temperature is higher by 10 to 70°C than the melting point of the polyphenylene sulfide resin.

6. A process as claimed in any preceding claim, in which the mixture is kneaded for a period in the range 1 to 10 min.

7. A process as claimed in any preceding claim, in which one or more other additives selected from an antioxidant, heat stabilizer, lubricant, crystal nucleating agent, U.V. absorber, colorant and releasing agent incorporated in the polyphenylene sulfide resin.

8. A modified polyphenylene sulfide resin whenever prepared by a process as claimed in any preceding claim.